# EUROPEAN PATENT APPLICATION

(11) **EP 3 845 102 A1**
(43) Date of publication of application: **07.07.2021**
(21) Application number: 19220124.2
(22) Date of filing: 30.12.2019
(51) Int. Cl.: A47J 43/07, A47J 44/00, A47J 43/044

(54) **KITCHEN APPLIANCE WITH WEIGHING APPARATUS**

(71) Applicant: BSH Hausgeräte GmbH, 81739 München (DE)
(72) Inventor: Brecko, Ales, 3000 Celje (SI); Cater, Matej, 3301 Petrovce (SI); Kovacic, Peter, 3303 Gomilsko (SI); Strojansek, Aleksander, 3331 Nazarje (SI)

(57) **Abstract**

A kitchen appliance (1) comprising:
- a base (3) with a bottom plate (31),
- a weighing apparatus (4),
- an anchoring means (44) arranged on the bottom plate (31),
characterised in that a form-fitting connection is established between the weighing apparatus (4) and the anchoring means (44) by rotating the weighing apparatus (4) with regard to the anchoring means (44).

## Description

### Background of the invention

The present invention relates to a kitchen appliance, more particularly to a kitchen appliance comprising a weighing apparatus.

### State of the Art

Kitchen appliances for processing food such as food processors, blenders, juicers, stand mixers are becoming ever popular. Demanding users require from new appliances almost unachievable performance. This means they have to be more powerful and also to process food faster and better than ever. Moreover, most users want a convenient and a compact appliance that possibly doesn't use much space in the kitchen, especially on the kitchen countertop.

It has become standard to provide kitchen appliances with weighing means, i.e. a scale. This holds especially true for the appliances that enable a so called guided (automated) cooking which requires precise and accurate weight measuring in order to achieve good cooking results even with complex recipes.

There are many solutions that allow for the integration of the scale into the kitchen appliance. Some solutions provide for a central arrangement in the appliance, usually just below the region where the container for processing food is positioned, whereas others are arranged in the lower part of the base (feet) of the appliance. In most of the cases above-mentioned solutions occupy a significant space in the interior of the appliance and this space is always scarce, more so if a compact appliance is to be designed.
Moreover, centrally arranged scales are usually quite complex and include several components. i.e. a special holders or bars to which weight sensors (also known as load cells) are attached. These sensors can also be integrated into the holders or bars. The components are close tolerance components and must be properly aligned to function accurately.
The weight sensors are actually electrical sensors that provide electrical signals indicative of a weight applied to the scale. The weight sensor is configured as a mechanically deformable element which operates as a force transducer and a strain sensor. When a force is applied to such a weight sensor, it mechanically deforms and produces an electrical signal which is proportional to the force applied to the weight sensor.

Weight sensors or weighing scales are typically attached to other parts of the kitchen machine in a force-fitting manner (by screwing) or material engagement (by glueing).
If there is a need for a compact kitchen appliance, attaching by screwing or glueing seems less convenient as it requires more space within the appliance.
Moreover, the said attaching methods are more time-consuming and are linked with significant additional costs. For instance, another assembly step needs to be put in place with possibly another operator and additional components (e.g. screws) are required.

In EP3424373 A1 weight sensors are integrated in or constitute the feet of the rice cooker. The weight sensors are arranged in the cavities of the cooker bottom. The solution is too complex and not suitable for a compact integration of the weight sensors into the kitchen appliance. Moreover, it requires too many components (e.g. a cover) and uses screws for connection of the parts.

### Problem to be solved

It is an object of the present invention to overcome the above-mentioned shortcomings of the prior art and particularly to integrate a weighing apparatus into a kitchen appliance in the most simple, efficient and convenient manner possible.

### Solution according to the invention

The object is achieved by a kitchen appliance according to the features of claim 1. Advantageous embodiments that can be implemented by themselves or in combination are described in dependent claims.

The invention relates to a kitchen appliance comprising:
- a base with a bottom plate,
- a weighing apparatus,
- an anchoring means arranged on the bottom plate,
wherein a form-fitting connection is established between the weighing apparatus and the anchoring means by rotating the weighing apparatus with regard to the anchoring means.

The kitchen appliance according to the invention provides the following advantages:
- very compact and convenient integration of the weighing apparatus into the appliance,
- minimum usage of space in the appliance,
- no need for a force-fitting or material engagement (screwing, glueing or welding) which provides for a quicker assembly and lower costs,
- easy replacement of an individual weighing apparatus.

### Embodiments of the invention

According to one preferred embodiment, the form-fitting connection is of bayonet type. Thus, by rotating the weighing apparatus with regard to the anchoring means a good connection can be achieved that requires no additional parts.

In a preferred embodiment, the weighing apparatus comprises a holding member, a weight sensor and a supporting element.

In an advantageous solution, the weighing apparatus is rotatable by 10 to 70° with regard to the anchoring means. More preferably, by 45°.

Optionally, the upper portion of the anchoring means comprises projections. The effect is that when the weighing apparatus is inserted in the anchoring means and rotated so that the projections thereof at least in part cover the edge portions of the holding member a form-fitting connection is made. Specifically, the projections are equidistantly arranged between each other.

In an advantageous solution, the weighing apparatus comprises a stopping member.
The stopping member is formed as a flexible part with a protrusion and is adapted to engage with a corresponding recess in the wall of the anchoring means. The effect is that one knows when the weighing apparatus has reached its end rotation position with regard to the anchoring means. Namely, upon reaching this end position an audible signal (»klick«) is triggered. Moreover, an operator assembling the weighing apparatus with the base using his hand or a tool is also able to haptically perceive this end rotation position and is therefore intuitively not prompted to continue rotating the weighing apparatus.

Advantageously, the anchoring means is integral with the base, in fact with its bottom plate. The effect is that means for attaching the anchoring means to the base are superfluous.

According to one embodiment, the anchoring means is releasably fixed to the base of the kitchen appliance, more specifically to its bottom plate. For instance, the anchoring means is threadedly connected to the base. This means the same anchoring means with possibly the weighing apparatus can be used with several appliances. In this way production costs for various types of appliances are reduced. Moreover, in case of a failure the weighing apparatus with the anchoring means as whole can be replaced without the need to disassemble the weighing apparatus from the anchoring means.

Optionally, the signal processing and evaluation unit can be integrated into the weighing apparatus, possibly into the weight sensor. In that way there is no need for a separate signal processing and evaluation unit.

In an advantageous solution, the signal processing and evaluation unit can be integrated into the main circuit board of the kitchen appliance. The effect is that here is no need for a separate signal processing and evaluation unit that is arranged somewhere in the interior of the appliance or integrated into the weight sensor. The same signal processing and evaluation unit can be used with several types of kitchen appliances that need a weighing function which means cost saving and represents a step towards establishing a so called platformization.

Typically, the weighing apparatus communicates with the signal processing and evaluation unit via electrical leads.
Advantageously, the weighing apparatus communicates with the signal processing and evaluation unit in a wireless way, for instance using Bluetooth, WiFi, ZigBee or any other wireless technology. The effect is there is no need for electrical wires anymore. Moreover, the sometimes complex wire routing in a compact appliance is dispensed with.

Preferably, the foot member is integral with the supporting element. Both parts can be realized using 2K technology, i.e. rubber and plastic injection molding.

Typically, the weighing apparatus has a cuboid shape. This means that its horizontal cross-section has substantially a square form. Other forms are possible as well, e. g. hexagonal.

Optionally, the holding member of the weighing apparatus and/or the anchoring means are made of plastic material. This accounts for a lower production cost.

### Brief description of the figures

Fig. 1 is a isometric view of a kitchen appliance
Fig. 2 is a isometric (exploded) view of the weighing apparatus
Fig. 3 is a isometric view of the weighing apparatus above the anchoring means
Fig. 4 is a isometric view of the weighing apparatus in the assembled state in the anchoring means
Fig. 5 is a section view of the weighing apparatus attached to the anchoring means

### Detailed description

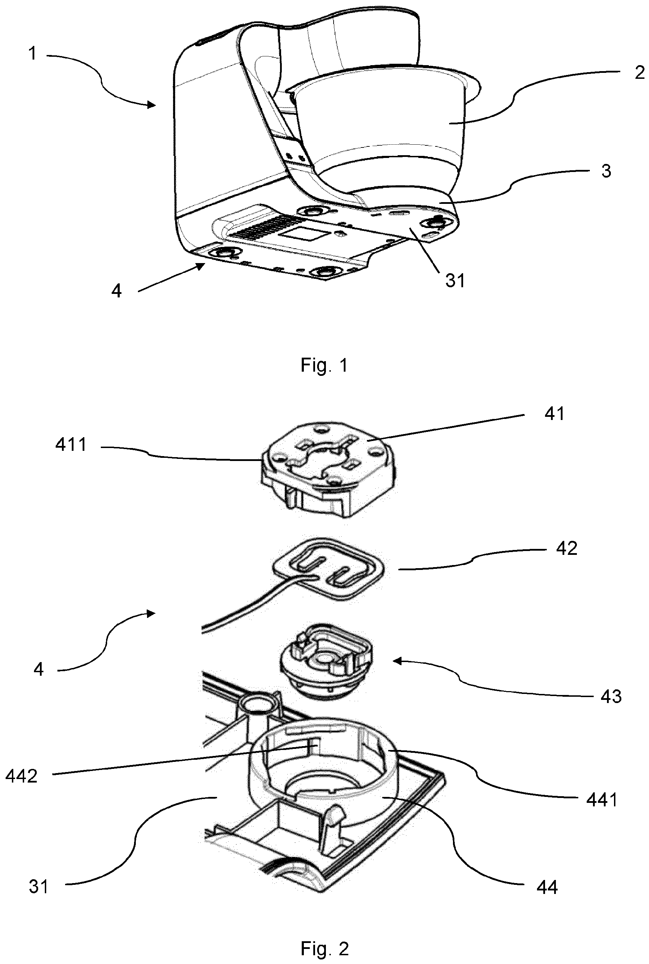

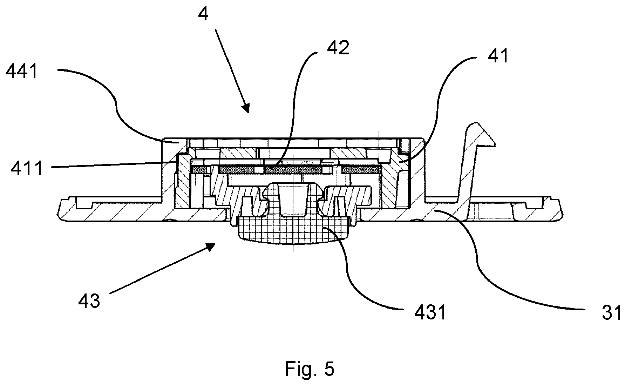

Fig. 1 depicts a kitchen appliance 1 with a container 2 which is received in a base 3 of the kitchen appliance 1. The arm of the appliance to which rotating food processing tool is coupled is positioned above the container 2 for processing food or possibly protruding into it. In the base 3 four weighing apparatuses 4 are arranged. The weighing apparatus 4 is configured so that basically only a foot member 431 of the supporting element 43 (as seen in Fig. 2 and Fig. 5) protrudes from the bottom plate 31 of the base 3.

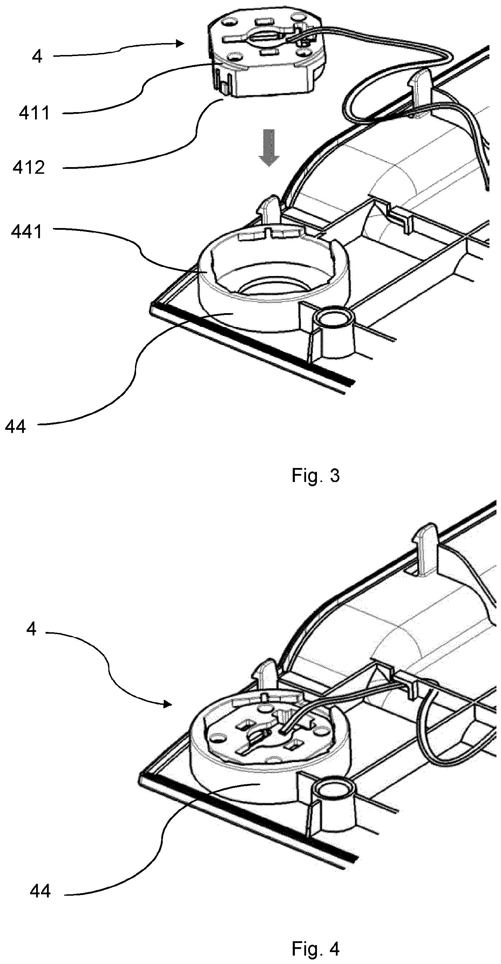

Fig. 2 shows the weighing apparatus 4 according to one embodiment of the invention. The weighing apparatus 4 comprises the holding member 41, the weight sensor 42 and the supporting element 43. The weighing apparatus 4 is configured to be received in the anchoring means 44 which is formed in the bottom plate 31 of the base 3 and is integral with it. The weight sensor 42 is of strain gauge type and is substantially a flat metal plate having an outer portion and a central portion which are integral and essentially delimited by an aperture. The central portion is deflectable under load. This design is well known in the art. The strain gauge (not shown in the figure) is attached to the central portion of the weight sensor 42 and connected via electrical cable to the PCB which includes electrical circuitry for A/D signal conversion, signal gain etc. (also not shown in the figure). The weight sensor 42 is to be attached to the supporting element 43. For this purpose the supporting element 43 has two hooking elements arranged on the sides of its top region. The holding member 41 receives the weight sensor 42 and the supporting element 43. The weight sensor 42 is attached to the holding member 41 in a snap-fit manner. As the weight sensor 42 is attached to the supporting element 43, the supporting element 43 is in turn attached to the holding member 41 to form the weighing apparatus 4. The anchoring means 44 is substantially of cylindrical shape with a cylindrical wall extending from the bottom plate 31 of the base 3.
The vertical edges of the holding member 41 which has a cuboid shape are rounded to be able to fit and rotate in the interior of the anchoring means 44. The upper portion of the anchoring means 44 comprises four equidistantly arranged projections 441 that are substantially parallel to the bottom plate 31 and configured to at least partially cover the upper opening of the anchoring means 44. This means that when the weighing apparatus 4 is inserted in the anchoring means 44 and rotated so that the projections 441 thereof at least in part cover the edge portions 411 of the holding member 41 a form-fitting connection is made (as seen in Fig. 3 and Fig. 4). In this way the weighing apparatus 4 is attached to the base 3 of the kitchen appliance 1, more specifically to its bottom plate 31. This type of connection is also known as a bayonet type.

Fig. 3 depicts the weighing apparatus 4 before it is inserted in the anchoring means 44. On at least one of the edge portions 411 of the weighing apparatus 4 (the holding member 41) a stopping member 412 is arranged. The stopping member 412 is configured to communicate with a corresponding recess 442 in the wall of the anchoring means 44 (see Fig. 2). This serves two purposes. First, when the weighing apparatus 4 is rotated clockwise by 45°, the stopping member 412 engages with the recess 442. This means, the weighing apparatus 4 has reached its end rotation position with regard to the anchoring means 44. Second, upon reaching this end position an audible signal (»klick«) is given. An operator assembling the weighing apparatus 4 with the base 3 using his hand or a tool is also able to haptically perceive this end rotation position and is therefore intuitively not prompted to continue rotating the weighing apparatus 4. The stopping member 412 is formed as a flexible part with a protrusion at the end. To be able to insert the weighing apparatus 4 with the stopping member 412 having the protrusion in the anchoring means 44 a corresponding slot is present in the wall thereof.

Fig. 4 shows the weighing apparatus 4 inserted and attached to the anchoring means 44. As already stated, this is done by rotating the weighing apparatus 4 clockwise by 45° in relation to the anchoring means 44. Hence, the weighing apparatus 4, more precisely the holding member 41, is fastened to the anchoring means 44 in a form-fitting manner. The upper face of the weighing apparatus 4 is provided with an opening for the electrical leads.

Fig. 5 depicts the weighing apparatus 4 in a cross-section in the assembled state in the anchoring means 44. The weight sensor 42 is arranged in the holding member 41 in the manner that its outer portion is fixedly attached to the interior of the holding member 41. The supporting element 43 is attached to the central portion of the weight sensor 42 which is deflectable. The edge portions 411 of the holding member 41 abut the projections 441 of the anchoring means 44. The supporting element 43 is provided with the foot member 431 on its lower end configured to communicate with a surface on which the kitchen appliance 1 stands. The foot member 431 can be made of rubber or any other suitable flexible material and protrudes through the lower opening of the anchoring means 44 which at the same time is the opening in the bottom plate 31 (see also Fig. 2).

When an item and/or an ingredient is placed in the container 2 of the kitchen appliance 1, a portion of the load (force) caused by the weight is distributed to each weighing apparatus 4. According to the principle of action-reaction the force is transmitted from the surface on which the appliance stands to the foot member 431, which then transmits the force to the supporting element 43. The supporting element 43 being coupled to the central portion of the weight sensor 42 brings about deflection thereof. As the outer portion of the weight sensor 42 is fixedly attached to the holding member 41 its central portion is able to bend in the gap provided between the weight sensor 42 and the holding member 41. Strain gauge on the deflectable central portion of the weight sensor 42 provides an electrical signal that depends on the deflection rate. The strain gauge may be of piezoresistive type whose resistance changes in response to bending, which affects the output signal provided by the weight sensor 42. The strain gauges of all the weight sensors 42 are connected in a Wheatstone bridge.

It can well be said that the weighing apparatus 4 constitutes a foot of the kitchen appliance 1.
The at least one weighing apparatus 4 forms a scale. Usually four weighing apparatuses 4 are needed. However, other combinations with two, three or even more weighing apparatuses are possible as well. This depends largely on the geometry of the bottom of the kitchen appliance base. For instance, a triangle contour typically requires three weighing apparatuses. The weighing apparatuses are electrically connected to the signal processing and evaluation unit which includes electrical circuitry for A/D signal conversion, signal gain etc. This unit can be integrated in the main circuit board of the kitchen appliance. The weighing apparatuses 4 can communicate with the signal processing and evaluation unit via electrical leads or in a wireless way using Bluetooth, WiFi, ZigBee or any other wireless technology.

The solution according to the invention and any of its embodiments can be used with any kitchen appliance that requires accurate measurement of weight. For instance, those kitchen appliances are stand mixers, food processors, blenders, juicers, water kettles, steamers etc.

### Reference signs list

1 kitchen appliance
2 container
3 base
31 bottom plate
4 weighing apparatus
41 holding member
411 edge portion
412 stopping member
42 weight sensor
43 supporting element
431 foot member
44 anchoring means
441 projection

## Claims

1. A kitchen appliance (1) comprising:
- a base (3) with a bottom plate (31),
- a weighing apparatus (4),
- an anchoring means (44) arranged on the bottom plate (31),
**characterised in that** a form-fitting connection is established between the weighing apparatus (4) and the anchoring means (44) by rotating the weighing apparatus (4) with regard to the anchoring means (44).

2. Kitchen appliance (1) according to any of the preceding claims, **characterised in that** the form-fitting connection is of bayonet type.

3. Kitchen appliance (1) according to any of the preceding claims, **characterised in that** the weighing apparatus (4) comprises a holding member (41), a weight sensor (42) and a supporting element (43).

4. Kitchen appliance (1) according to any of the preceding claims, **characterised in that** the weighing apparatus (4) is rotatable by 10 to 70° with regard to the anchoring means (44).

5. Kitchen appliance (1) according to claim 4, **characterised in that** the weighing apparatus (4) is rotatable by 45°.

6. Kitchen appliance (1) according to any of the preceding claims, **characterised in that** the upper portion of the anchoring means (44) comprises projections (441).

7. Kitchen appliance (1) according to claim 6, **characterised in that** the projections (441) are equidistantly arranged.

8. Kitchen appliance (1) according to any of the preceding claims, **characterised in that** the weighing apparatus (4) comprises a stopping member (412).

9. Kitchen appliance (1) according to claim 8, **characterised in that** the stopping member (412) is formed as a flexible part.

10. Kitchen appliance (1) according to claim 9, **characterised in that** the stopping member (412) comprises a protrusion.

11. Kitchen appliance (1) according to any of the preceding claims, **characterised in that** the anchoring means (44) is releasably fixed to the base (3) of the kitchen appliance (1).

12. Kitchen appliance (1) according to any of the preceding claims, **characterised in that** the signal processing and evaluation unit is integrated into the main circuit board of the kitchen appliance (1).

13. Kitchen appliance (1) according to any of the preceding claims, **characterised in that** the weighing apparatus (4) communicates with the signal processing and evaluation unit in a wireless way.

14. Kitchen appliance (1) according to any of the preceding claims, **characterised in that** the foot member (431) is integral with the supporting element (43).

15. Kitchen appliance (1) according to any of the preceding claims, **characterised in that** the weighing apparatus (4) has a cuboid shape.
